Europäisches Patentamt

European Patent Office

Office européen des brevets

(11) Veröffentlichungsnummer: **0 174 295**
**B1**

(12) **EUROPÄISCHE PATENTSCHRIFT**

(45) Veröffentlichungstag der Patentschrift: **16.08.90**

(51) Int. Cl.⁵: **B 29 D 23/22, B 29 C 67/14**

(21) Anmeldenummer: **85890204.2**

(22) Anmeldetag: **03.09.85**

(54) **Verfahren zur Herstellung von Rohren.**

(30) Priorität: **07.09.84 DE 3432907**

(43) Veröffentlichungstag der Anmeldung:
**12.03.86 Patentblatt 86/11**

(45) Bekanntmachung des Hinweises auf die
Patenterteilung:
**16.08.90 Patentblatt 90/33**

(84) Benannte Vertragsstaaten:
**AT BE CH DE FR GB IT LI LU NL SE**

(56) Entgegenhaltungen:
**EP-A-0 027 502
BE-A- 732 599
FR-A-1 038 589
FR-A-1 514 946
US-A-3 434 860
US-A-3 843 759
US-A-3 921 674**

**MACHINE DESIGN, Band 33, 2. Februar 1961,
Seiten 99-100; W.E. CAWLEY: "The prestressed
shaft"**

(73) Patentinhaber: **BASF Aktiengesellschaft
Carl-Bosch-Strasse 38
D-6700 Ludwigshafen (DE)**

(72) Erfinder: **Puck, Alfred, Prof.Dr.-Ing.
Am Ahlberg 33
D-3524 Immenhausen-Mariendorf (DE)**
Erfinder: **Schürman, Helmut, Dipl.-Ing.
Habichtswalder Strasse 4
D-3500 Kassel (DE)**

Courier Press, Leamington Spa, England.

**Beschreibung**

Die Erfindung bezieht sich auf ein Verfahren zur Herstellung von langgestreckten Hohlkörpern aus faserverstärktem Kunststoff, z.B. rohrförmigen Torsionsstäben, bestehend aus mehreren konzentrisch zueinander ineinander gelagerten Rohren, wobei die Rohre an einem Ende miteinander verbunden werden, daß jedes Rohr unter der Einwirkung einer Kraft steht, und daß die Rohre unter Krafteinwirkung am anderen Ende miteinander verbunden werden.

Es wird seit einiger Zeit versucht, eine Reihe von Bauelementen, die bislang aus isotropem Material aufgebaut waren, wie beispielsweise Druckrohre, rohrförmige Kardanwellen, Druckbehälter, Torsionsstäbe und dergleichen, durch Werkstoffe zu ersetzen, die gerichtete Eigenschaften aufweisen. Als wohl bekanntester Werkstoff dieser Gruppe ist glasfaserverstärktes Polyester, bzw. glasfaserverstärktes Epoxid zu bezeichnen. Hierbei soll est so sein, daß die Festigkeit im wesentlichen durch das Fasermaterial vermittelt wird, wohingegen der Kunststoff lediglich zur Verbindung dieser Fasern dienen soll. Die Schwachstelle dieser Werkstoffe liegt nun darin, daß sie einerseits heterogen aufgebaut sind, und daß anderseits did Kunststoffe als solche nur eine relativ geringe Zugefestigkeit aufweisen, wobei aber gleichzeitig die Druckfestigkeit in durchaus ausreichender Höhe erhaltbar ist. Nach den Bestreben, durch neue Kunststoffe bzw. durch Variationen der bekannten Kunststoffe die Eigenschaften zu erhöhen, wodurch in der Regel lediglich kontinuierliche Verbesserungen erreicht werden können, wird versucht, dadurch spezifischen Aufbau den heterogenen Eigenschaften gerecht zu werden.

Aus der DE-A1 28 42 531 wird ein Verfahren zur Herstellung von Kunststoffrohren bekannt, wobei ein zweischichtiges Rohr aufgebaut wird. Zuerst wird ein Innenrohr mit im wesentlichen im Umfang verlaufenden Fasern erzeugt, so daß die Fasern mit de Längsrichtung des Rohres einen Winkel von im wesentlichen 90 Grad einschließen, wobei die Abweichungen lediglich dadurch bedingt sind, daß eine unendliche Faser um das Rohr gewickelt werden soll, so daß ein geringer Steigungswinkel ensteht. Dieses Rohr wird ausgehärtet, worauf in das Innere ein Druckmittel eingebracht und gleichzeitig von außen eine axialwirkende Druckkraft aufgebracht wird. Der Kunststoff, welcher die einzelnen Fasern miteinander verbindet, ist ein hartelastischer Kunststoff, so daß eine elastische Verformung auftritt. Auf diesem so elastisch verformten Körper wird eine zweite Rohrschicht mit Glasfasern aufgebracht, wobei die Glasfasern im wesentlichen in Achsrichtung orientiert sind. Dieses zweite Rohr, welches mit dem ersten Rohr, z.B. über den hartelastischen Kunststoff verbunden ist, gelangt ebenfalls zur Aushärtung, wonach das erste Rohr vom Druckmedium und vom Druck in Axialrichtung entlastet wird. Bei eiknen derartigen Rohr ist der äußere Teil desselben soweit vorgespannt, daß des auf innere Druckspannungen ausüben kann. Das äußere Rohr muß mit einem kalthärtbaren Kunststoff gefertigt werden, damit die Vorspannung des inneren Rohres nicht durch die thermische Verformung des Kunststoffes beseitigt wird. Es können somit nur bestimmte Kunststoffe, welche in der Regel ein geringeres Eigenschaftsniveau besitzen, verwendet werden.

Wird ein Torsionsrohr beansprucht, dann werden die Fadenlagen unterschiedlich beansprucht, und zwar einmal auf Druck und einmal auf Zug. Tritte eine solche Fadendehnung infolge der Torsionsbeanspruchung auf, und zwar in Richtung der Fadenachse, dann erfolgt notwendigerweise auch ein Dehnung quer zu der Fadenrichtung der anderen Fadenlage mit der Folge, daß diese Dehnung zu einer Rißbildung zwischen den Fäden führt. Dadurch wird der Kunststoffadenverbund zerrüttet, was insbesondere eine erhebliche Herabsetzung der Ermüdungsfestigkeit bei dynamisch hochbeanspruchten Torsionsrohren zur Folge hat.

Bei weichelastischen Schläuchen, welche z.B. aus Weichpolyvinylchloride, Gummi oder dergleichen aufgebaut sind, ist es bekannt, Verstärkungseinlagen vorzusehen, die im wesentlichen ca. 55 Grad zur Längsachse einnehmen, wobei beispielsweise ein Geflecht vorgesehen sein kann, welches idente Winkel jedoch nur unterschiedliche Vorzeichen aufweist.

Aus der DE-A1 23 23 708 wird ein Verfahren zur Herstellung eines Druckgefäßes und zwar eines Raketenmotorgehäuses bekannt, wobei zwei Hohlkörper ineinander geschoben werden, die verschiedene Winkel der Fasern des faserverstärkten Kunststoffes aufweisen. Diese Hohlkörper können auch gegebenenfalls miteinander verklebt werden. Durch die verschiedene Anordnung des Wickelwinkels soll der Tatsache Rechnung getragen werden, daß die Beanspruchung in Längsrichtung zweimal so stark ist, wie jene in Radialrichtung.

Aus der Zeitschrift Maschine Design 33 (Febr. 1961) ist ein Verfahren zur Herstellung eines Torsionsstabes bekannt, der aus mehreren konzentrisch zueinander ineinander gelagerten Rohren besteht, wobei die Rohre im in einer Richtung gegeneinander verdrehten Zustand miteinander verbunden sind. Die Rohre sind hierbei zum jeweils unterschiedliche Winkel aus der Ausgangslage verdreht, wobei die Torsionsrichtung gleich ist. Hierdurch soll eine gleichmäßige Spannungsverteilung im Torsionsstab erreicht werden.

Bei einen Hohlkörper, der aus mehreren konzentrisch zueinander inaneinder gelagerten rohren aufgebaut ist, die im belasteten Zustand an ihren Enden miteinander verbunden sind, besteht jedoch die Gefahr, daß ein derart aufgebauter Hohlkörper selbst bei nur geringfügiger Beanspruchung Beulen bildet, die unmittelbar eine Zerstörung des Bauteiles bewirken.

Zur Vermeidung dieses Nachteiles wird erfindungsgemäß vorgeschlagen, daß zumindest zwei Rohre mit gleicher Faserorientierung, jedoch bei unterschiedlichen Vorzeichen mit Abstand zueinander

# EP 0 174 295 B1

konzentrisch ineinander gelagert sind, wobei die Rohre eine Faserorientierung zwischen 15 und 75 Grad, vorzugsweise jedoch 45 Grad aufweisen, und daß mindestens ein Rohr mit einer Kraft beaufschlagt wird, wobei während der Belastung zum Zwecke der Verbindung der im wesentlichen ringförmige Zwischenraum zwischen den beiden Rohren mit einem Bindemittel, insbesondere einem hartelastischen Kunststoff, ausgefüllt wird. Ein beispielsweise derart hergestelltes Torsionsrohr, bei dem die beiden konzentrisch zueinander ineinander gelagerten Rohre vollständig miteinander verbunden sind, weist bei gleichen Abmessungen eine weitus höhere Belastbarket auf, als ein aus zwei Rohren bestehendens Torsionsrohr, bei dem lediglich die Enden de Rohre miteinander verbunden sind.

Wird das innere und/oder äußere Rohr mit einem Torsionsmoment, gegebenenfalls unter Wärmeeinwirkung beaufschlagt, so kann auch eine Vorspannung erreicht werden. Erfolgt die Krafteinwirkung mit Wärmebeaufschlagung, so kann ma ein Relaxierung der Eigenspannungen vorwegnehmen. Die Einwirktemperatur sollte etwas höher als die erwartete Einsatztemperatur sein. Man läßt nun die erhöhte Temperatur einwirken, während man z.B. auf beide Rohre ein entgegengerichtetes Torsionsmoment aufbringt. Dieses Moment wird aufrechterhalten, während infolge der erhöhten Temperatur die Verdrehung der Rohre ständig zunimmt. Nach ein paar Minuten können dann auch die freien Enden der beiden ineinandergesteckten Rohr miteinander verbunden werden und auch der Zwischenraum zwischen den beiden Rohren vollfächig gefüllt werden.

Erfährt ein so behandeltes Bauteil im Betrieb höhere Temperaturen, so wird die Relaxation der gezielt eingebrachten Eigenspannungen deutlich schwächer verlaufen, der Nutzen des Bauteils also auch bei erhöhten Temperaturen in fast vollem Umfang erhalten bleiben.

Wird das innere Rohr mit einer radical nach außen weisenden Druckkraft, z.B. einem Druckmedium beaufschlagt und zusätzlich mit einer axialen Zugkraft, die dem Betrag nach kleiner ist, als die radical nach außen wesende Druckkraft, während der Verbindung mit dem weiteren Rohr beaufschlagt, wobei die Faserorientierung des inneren und gegebenenfalls des äußeren.

Rohres zur Längsachse zwischen etwa 45 und 75 Grad beträgt, so kann ein Rohr erhalten werden, das in Längsrichtung besonders elastisch ist.

Ist das innere Rohre mit einer radial nach außen wirkenden Druckkraft, z.B. einem Druckmedium und zumindest einer in Achsrichtung wirkenden Zugkraft während der Verbindung de Rohre miteinander beaufschlagt, wobei die Faserorientierung des inneren, gegebenenfalls des äußeren Rohres zur Längsachse zwischen etwa 15 und 45 Grad beträgt, so wird ein Rohr erhalten, welches in Längsrichtung eine besonders hohe Biege- und Zugsteifigkeit aufweist.

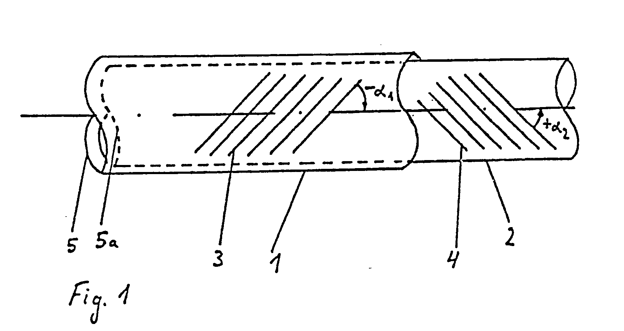

Im folgenden wird die Erfindung anhand der Zeichnung und der Beispiele näher erläutert.

In der Zeichnung sind zwei Rohre 1 und 2 dargestellt, die konzentrisch zueinander angeordnet sind. Hierbei verlaufen die Fäden der Fadenlage 3 des äußeren Rohres 1 unter einem negativen Wickelwinkel $\alpha$ 1, die Fäden der Fadenlage 4 des inneren Rohres 2 unter einem positiven Wickelwinkel $\alpha$ 2. Die Rohre 1 und 2 werden an ihrem einen Ende 5, 5a fest miteinander verbunden, und dann einer Krafteinwirkung, z.B. einer Torsionskraft ausgesetzt und sodann am anderen Ende miteinander verbunden, z.B. verklebt.

## Beispiel 1

Es wurde ein Innenrohr mit einem Innendurchmesser von 40 mm und einer Wandstäke von 1,5 mm unter Einhaltung eines Wickelwinkels von +45° hergestellt, und das Epoxidharz aushärten gelassen. Sodann wurde ein weiteres analoges Rohr mit einem Wickelwinkel von −45° hergestellt, wobei der Innendurchmesser des Rohres 43,5 mm betrug und die Wandstärke 1,3 mm aufwies. Die beiden Rohre wurden mit einem Torsionsmoment von + bzw. − 203 Nm gedreht und durch ein Epoxidharz dauerhaft verbunden. Ein derartiges Rohr wies ein maximal ertragbares Torsionsmoment von 2250 Nm auf, wohingegen zwei Rohre, die nicht gegeneinander vorspannt waren, und lediglich an ihren Enden eine Verbindung aufwiesen, ein Torsionsmoment von 1290 Nm hatten. Es konnte somit eine Steigung um 74% erreicht werden. Ein derartiges Torsionsrohr ist besonders für wechselnde Drehrichtung von hoher Bedeutung, da Vorspannungen in beiden Richtungen gegeben sind.

## Beispiel 2

Es wurde Torsionsrohr entsprechend Beispiel 1 nach dem erfindungsgemäßen Verfahren unter Einhaltung der Parameter gemäß Beispiel 2 der Tabelle hergestellt, wobei ein derartiges Torsionsrohr ein maximales ertragbares Torsionsmoment von 2095 Nm aufwies. Ein Doppelrohr, welches lediglich an den Enden verbunden wurde, wies ein maximales ertragbares Torsionsmoment von 1290 Nm auf. Ein derartiges Torsionsrohr ist insebesondere für eine Drehrichtung bestimmt.

## Beispiel 3

Es wurde ein Rohr analog Beispiel 1, jedoch unter der Einhaltung der Parameter gemäß Beispiel 3 der Tabelle ausgeführt, wobei ein Innendruck von 36 bar im Innenrohr vorgesehen wurde, und das Innenrohr einer axialen Zugkraft von 24 446 N und einem Torsionsmoment von −351 Nm ausgesetzt wurde. In diesem Zustand wurde das Innenrohr mit dem Außenrohr verbunden. Ein derartiges Torsionsrohr weist ein um 43% größeres Torsionsmoment als ein normales Doppelrohr mit entsprechender Winkelorientierung auf und ist besonders biegesteif.

3

Beispiel 4

Es wurde ein Rohr gemäß Beispiel 3 unter Einhaltung der Parameter gemäß Beispiel 4 erzeugt, wobei aufgrund der zusätzlichen Druckkraft ein biegeweiches Torsionsrohr erhalten wurde.

Obwohl die Winkel der Faserorientierung in absoluten Beträgen bei den Beispielen gleich sind, können auch unterschiedliche Winkel eingehalten werden.

| | Beispiel 1 | Beispiel 2 | Beispiel 3 | Beispiel 4 |
|---|---|---|---|---|
| **Innenrohr** | | | | |
| Wickelwinkel | $+45^{\circ}$ | $+45^{\circ}$ | $+30^{\circ}$ | $+60^{\circ}$ |
| Innendurch-messer (mm) | 40 | 40 | 40 | 40 |
| Wanddicke (mm) | 1,5 | 1,5 | 1,5 | 1,5 |
| Faserart | E-Glas | E-Glas | E-Glas | E-Glas |
| Harzart | Epoxidharz | Epoxidharz | Epoxidharz | Epoxidharz |
| Torsions-moment (Nm) | -203 | -203 | -351 | -351 |
| Innendruck (bar) | 0 | 0 | 36 | 108 |
| Axialkraft (N) | 0 | 0 | 24 446 | -4 890 |
| **Außenrohr** | | | | |
| Wickelwinkel | $-45^{\circ}$ | $-45^{\circ}$ | $-30^{\circ}$ | $-60^{\circ}$ |
| Innendurch-messer (mm) | 43,5 | 43,5 | 43,5 | 43,5 |
| Wanddicke (mm) | 1,3 | 1,3 | 1,3 | 1,3 |
| Faserart | E-Glas | E-Glas | E-Glas | E-Glas |
| Harzart | Epoxidharz | Epoxidharz | Epoxidharz | Epoxidharz |
| Torsions-moment (Nm) | +203 | 0 | 0 | 0 |
| Innendruck (bar) | 0 | 0 | 0 | 0 |
| Axialkraft (N) | 0 | 0 | 0 | 0 |
| max. ertragbares Torsionsmoment (Nm) *ohne* Vorbe-handlung | 1290 | 1290 | -1181 | -1181 |
| max. ertragbares Torsionsmoment (Nm) *mit* Vorbe-handlung | 2250 | -2095 | -1688 | -1688 |
| proz. Zunahme durch das Ver-fahren | 74% | 62% | 43% | 43% |
| Torsionsrohr für: | wechselnde Drehrich-tung | vorwiegend eine Dreh-richtung | biegesteif | biegeweich |

**Patentansprüche**

1. Verfahren zur Herstellung von langgestreckten Hohlköpern aus faserverstärktem Kunststoff, z.B. rohrförmigen Torsionsstäben, bestehend aus mehreren konzentrisch zueinander ineinander gelagerten Rohren (1, 2), wobei die Rohre (1, 2) an einem Ende (5, 5a) miteinander verbunden werden, daß jedes Rohr (1, 2) unter der Einwirkung einer Kraft steht, und daß die Rohre (1, 2) unter Krafteinwirkung an dem anderen Ende miteinander verbunden werden, dadurch gekennzeichnet, daß zumindest zwei Rohre (1, 2) mit etwa gleicher Faserorientierung (3, 4), jedoch bei unterschielichen Vorzeichen mit Abstand zueinander konzentrisch ineinander gelagert sind, wobei die Rohre (1, 2) eine Faserorientierung zwischen 15 Grad und 75 Grad, vorzugsweise jedoch 45 Grad aufweisen, und daß mindestens ein Rohr mit einer Kraft beaufschlagt wird, wobei während der Belastung zum Zwecke der Verbindung der im wesentlichen ringförmige Zwischenraum zwischen den beiden Rohren (1, 2) mit einem Bindemittel, insbesondere einem hartelastischen Kunststoff, ausgefüllt, wird.

2. Verfahren nach Anspruch 1, dadurch gekennzeichnet, daß das innere (2) und/oder äußere Rohr (1) mit einem Torsionsmoment gegebenenfalls unter Wärmeeinwirkung beaufschlagt wird.

3. Verfahren nach Anspruch 2, dadurch gekennzeichnet, daß das innere (2) und das äußere Rohr (1) jeweils mit einem Torsionsmoment unterschiedlicher Richtung beaufschlagt wird.

4. Verfahren nach Anspruch 1, dadurch gekennzeichnet, daß das innere Rohr (2) mit einer radial nach außen weisenden Druckkraft, z.B. einem Druckmedium, beaufschlagt wird und dieses Rohr (2) zusätzlich mit einer axialen Zugkraft, die dem Betrag nach kleiner ist als die radial nach außen weisende Druckkraft, während der Verbindung mit dem weiteren Rohr (1) beaufschlagt wird, wobei die Faserorientierung des inneren (2) und gegebenenfalls des äußeren Rohres (1) zur Längsachse zwischen etwa 45 Grad und etwa 75 Grad beträgt.

5. Verfahren nach Anspruch 1, dadurch gekennzeichnet, daß das innere Rohr (2) mit einer radial nach außen wirkenden Druckkraft, z.B. einem Druckmedium und mindestens mit einer in Achsrichtung wirkenden Zugkraft während der Verbindung der Rohre (1, 2) miteinander beaufschlagt wird, wobei die Faserorierentierung des inneren (2) und gegebenenfalls des äußeen Rohres (1) zur Längsachse zwischen etwa 15 und 45 Grad beträgt.

**Revendications**

1. Procédé de fabrication de corps creux étendus en longueur, en matiere plastique renforcée par des fibres, par exemple des barres de torsion tubulaires, constitués de plusieurs tubes (1, 2) montés les un dans les autres, concentriquement les un aux autres, les tubes (1, 2) étant reliés l'un à l'autre à une extrémité (5, 5a), chaque tube (1, 2) étant soumis à une l'action d'une force et les tubes (1, 2) étant reliés entre eux à l'autre extrémité, sous l'action d'une force, caractérisé par le fait qu'au moins deux tubes (1, 2) sont montés l'un dans l'autre concentriquement écartés l'un de l'autre avec sensiblement la même orientation de fibres (3, 4) mais de tracés différents, des tubes (1, 2) présentant une orientation des fibres comprise entre 15 degrés et 75 degrés, de préférence toutefois de 45 degrés et qu'au moins un tube est soumis à une force, l'interstice sensiblement annulaire entre les deux tubes (1, 2) étant, pendant la charge en vue de la liaison, remplie d'un liant, en particulier une matière plastique élastiquement dure.

2. Procédé selon la revendication 1, caractérisé par le fait que le tube intérieur (2) et/ou le tube extérieur (1) est soumis, éventuellement sous l'action de la chaleur, à un couple de torsion.

3. Procédé selon la revendication 2, caractérisé par le fait que le tube intérieur (2) et le tube extérieur (1) sont soumis chacun à un couple de torsion de directions différentes.

4. Procédé selon la revendication 1, caractérisé par le fait que le tube intérieur (2) est soumis à une force de pression, par exemple à un fluide sous pression, dirigée radialement vers l'extérieur, et ce tube (2) est soumis additionnellement, pendant la liaison avec l'autre tube (1), à une force de traction axiale, dont la valeur est plus petite que la force de pression radiale dirigée vers l'extérieur, l'orientation des fibres du tube intéieur (2), et éventuellement du tube extgérieur (1), étant comprise entre environ 45 degrés et environs 75 degrés par rapport à l'axe longitudinal.

5. Procédé selon la revendication 1, caractérisé par le fait que le tube intérieur (2) est soumis, pendant la liaison des tubes (1, 2) entre eux, à une force de pression, par exemple un fluide sous pression, radiale dirigée vers l'extérieur et au moins à une force de traction agissant en direction axiale, l'orientation des fibres du tube intérieur (2) et éventuellement du tube extérieur (1) étant comprise entre 15 degrés et 45 degrés par rapport à l'axe longitudinal.

**Claims**

1. A process for the production of long stretched-out hollow articles made from fiber-reinforced plastic, for example tubular torsion bars, comprising several tubes (1, 2) mounted concentrically one inside the other, the tubes (1, 2) being connected to one another at one end (5, 5a), each tube (1, 2) being under the influence of a force, and the tubes (1, 2) being connected to one another at the other end under the influence of a force, wherein two more tubes (1, 2) having approximately the same fiber orientation (3, 4), but with a different sign, are mounted concentrically one inside the other at distance from one another, the tubes (1, 2) having a fiber orientation between 15 degrees and 75 degrees, but preferably 45 degrees, and wherein at least one tube is subjected to a force, the essentially annular interspace between the two tubes (1, 2) being filled with a binder, in particular a hard flexible plastic, during the loading in order to facilitate connection.

2. A process as claimed in claim 1, wherein the inner (2) and/or outer tune (1) is subjected to a torsional moment, with or without the action of the heat.

3. A process as claimed in claim 2, wherein the inner (2) and the outer tube (1) are each subjected to a torsional moment of different directions.

4. A process as claimed in claim 1, wherein the inner tube (2) is subjected to a radially outward compressive force, for example a hydraulic fluid, and this tube (2) is additionally subjected to an axial tensile force, the absolute value of which is smaller than that of the radially outward compressive force, during the connection to the further tube (1), the fiber orientation of the inner (2) and, if present, the outer tube (1) to the longitudinal axis is between about 45 degrees and about 75 degrees.

5. A process as claimed in claim 1, wherein the inner tube (2) is subjected to a radially outward-acting compressive force, for example a hydraulic fluid, and one or more tensile forces acting in the axial direction, during the connection of the tubes (1, 2) to one another, the fiber orientation of the inner (2) and, if present, the outer tube (1) to the longitudinal axis being between about 15 and 45 degrees.

Fig. 1